# EUROPÄISCHE PATENTSCHRIFT

(11) **EP 1 830 239 B1**
(45) Veröffentlichungstag und Bekanntmachung des Hinweises auf die Patenterteilung: **25.07.2018**
(21) Anmeldenummer: 07002814.7
(22) Anmeldetag: 09.02.2007
(51) Int. Cl.: E05B 3/06, E05B 15/00, F16D 7/10, G05G 5/00

(54) **Rastmittel und Verwendung bei Betätigungshandhaben**
Indexing means and its use in actuation handles
Moyens d'indexation et leur utilisation dans des poignées d'actionnement

(30) Priorität: 01.03.2006 DE 102006009371
(43) Veröffentlichungstag der Anmeldung: 05.09.2007
(73) Patentinhaber: HOPPE AG, 39011 Lana (BZ) (IT)
(72) Erfinder: Engel, Heinz-Eckhard, 39020 Glums (BZ) (IT); Alber, Helmut, 39028 Schlanders (IT)
(74) Vertreter: Patentanwälte Olbricht Buchhold Keulertz

(56) Entgegenhaltungen:
- EP-A- 1 321 604
- DE-A1- 3 402 089
- DE-A1- 3 904 997
- DE-A1- 10 002 748
- DE-A1- 10 100 874
- DE-U1- 29 903 896
- US-A- 2 108 326
- US-B1- 6 425 837

## Beschreibung

Die Erfindung bezieht sich auf ein Rastmittel einer Betätigungshandhabe für Fenster oder Türen nach dem Oberbegriff des Anspruchs 1 und auf die Verwendung eines derartigen Rastmittels nach dem Oberbegriff des Anspruchs 12. In verschiedenen Bereichen der Technik besteht Bedarf an Rastmitteln zum lösbaren Festlegen relativ zueinander beweglich verbundener Bauteile. Vor allem wenn ein Bauteil stationär ist, will oder muß man oft eine Lagefixierung eines ihm räumlich zugeordneten, beweglichen Bauteils zumindest vorübergehend ermöglichen. Als Alltagsbeispiel ist die Verrastung von Schubladen, Klappen oder Möbeltüren zu nennen, wozu sogenannte Schnäpper dienen können. Diese bestehen typisch aus einem Blech mit Rund- oder Ovalloch an einer festen Fläche und aus einem Gehäuse, das eine federbelastete Kugel enthält, an einer benachbarten Fläche, die z.B. klapp- oder schwenkbar sein kann. In einer gewünschten Position fällt die Kugel in das Lochblech ein, wodurch die Bauteile in lösbarer Weise aneinander fixiert sind, allerdings nicht selten relativ ungenau, d.h. mit Wackel- oder Klapperspiel. das sehr stören kann.
Ein bedeutsames Anwendungsgebiet von Rastmitteln sind Betätigungshandhaben für Fenster und Türen. Gewöhnlich wird deren Handgriff mit einem Ansatz axialfest, aber drehbar an einem Anschlagkörper befestigt, elwa an einem Tür(unter)schild, einer Befestigungsplatte, einer Rosette o.dgl. Meist wird der Anschlagkörper an der Fensterrahmen- oder Tür-Fläche angeschraubt. Zwischen ihm und dem Griffansatz sorgt eine z.B. aus Kunststoff bestehende Lagerbuchse für eine reibungsarme und stabile Drehlagerung des Griffs, der in seinem Bund bzw. Ansatz einen Vierkantstift aufnimmt, dessen Drehmitnahme eine Riegelmechanik im Fensterrahmen bzw. Türblatt betätigt.

Während Griffe aus metallischen Werkstoffen häufig mit einer Anschlagplatte bzw. Lagerbuchse axialfest und drehbar verbördelt werden (siehe DE-U1-74 31 689), sind zum Beispiel aus DE-U1-75 03 143 und EP-A1-0 406 566 Schnappverbindungen bei Kunststoffgriffen bekannt. Man hat ferner Handgriff und Anschlagkörper - auch mit separater Rosetten- bzw. Schildabdeckung - getrennt ausgebildet und zwischen den Bauteilen eine lösbare Rastverbindung vorgesehen, die eine bauseitige Montage des Griffs an dem Anschlagkörper ermöglicht. DE-U1-200 07 818 schlägt vor, daß eine Lagerbuchse endseitig auf einen Griffbund aufgesteckt und mit diesem axial- und drehfest verrastet bzw. verriegelt wird. Hierzu dienen Kugeln, Stifte, Bolzen o.dgl., die beim Fügen des Vierkantstifts im Griffbund kraft- und/oder formschlüssig in korrespondierende Aussparungen der Lagerbuchse eingreifen. Der Griff löst sich von der Anschlagplatte nur, wenn man den Vierkant aus dem Griffbund zieht.

In all solchen Fällen kann es sehr stören, daß die einander zugeordneten Bauteile in einer Sollstellung oft keineswegs wirklich gut verrastet sind, sondern mehr oder weniger freies Bewegungsspiel haben. Die Folge ist nicht selten, daß im Laufe der Zeit Funktions- oder Stabilitätsmängel eintreten. Das kann beim Benutzer ein Gefühl der Unsicherheit auslösen, nicht nur - aber gerade auch - bei Handhaben, wo z.B. in einer Beschlagplatte gelagerte Rastkugeln in rinnen-, mulden- oder lochförmigen Ausnehmungen generell mit Fügespiel einfallen. Sie schlagen mit ihrem Durchmesser (in Umfangsrichtung) links und rechts an den Rastausnehmungen an, was sich am Griff als wenig angenehmes Wackelspiel äußert.

Ziel der Erfindung ist es, unter Überwindung der Nachteile des Standes der Technik Rastmittel zu schaffen, die bei einfachem Aufbau einer Anordnung von relativ zueinander beweglichen, insbesondere auch dreh- oder schwenkbaren Bauteilen in ausgewählten Positionen eine spielfreie Verrastung ermöglichen. Solche Rastmittel sollen unter anderem bei axialfest/drehbar gelagerten Betätigungshandhaben einsetzbar sein, die kostengünstig gefertigt und montiert werden können. Dabei wird angestrebt, daß unabhängig vom handwerklichen Geschick von Monteuren oder Benutzern in verrasteter Handhabenposition kein störendes Wackel- oder Klapperspiel auftritt.

Hauptmerkmale der Erfindung sind in den Ansprüchen 1 und 12 angegeben. Ausgestaltungen sind Gegenstand der Ansprüche 2 bis 11 und 13 bis 17.

Rastmittel einer Betätigungshandhabe für Fenster oder Türen oder für relativ zueinander bewegliche Bauteile aufweisend einen Rastkörperteil und einen Ausnehmungsteil, die einander räumlich unmittelbar zugeordnete und einander zugewandte Flächen, nämlich eine Rastkörperteil-Außenfläche und eine Ausnehmungsteil-Außenfläche, aufweisen; weiterhin aufweisend wenigstens einen Rastkörper, der in einer Führung des Rastkörperteils unter Vorspannung stehend insbesondere unverlierbar so gehalten ist, daß er die Rastkörperteil-Außenfläche überragt, und in eine Ausnehmung, die an einer dem Rastkörperteil zugewandten Ausnehmungsteil-Außenfläche des Ausnehmungsteils vorgesehen ist, teilweise eintritt, zeichnet sich erfindungsgemäß durch solche Ausbildung und Anordnung der Führung des bzw. jedes Rastkörpers aus, daß sich der Rastkörper nur einseitig oder punktuell an einer Stützstelle der Führung und an einer zugeordneten Ansatzstelle der Ausnehmung andrückt und dadurch, dass an den zu verrastenden Bauteilen mindestens zwei einander zugeordnete Rastpaare vorhanden sind, die jeweils aus je einem Rastkörper und einer Ausnehmung bestehen, und dass die Rastkörper mit gleicher Teilung an einem Umfang des Ausnehmungsteils angreifen und die Ansatzstellen der Ausnehmungen in ungleichen Winkeln auf dem Umfang des Ausnehmungsteils verteilt sind. Die Rastkraft wirkt also nicht, wie herkömmlich, irgendwo im Randbereich der Ausnehmung, was allgemein mit Wackelspiel einhergeht; vielmehr kommt der bzw. jeder punktuell in seiner Führung innen abgestützte Rastkörper mit seinem vorragenden Teil außen an einem Seitbereich der Ausnehmung zur Punktanlage. Die gegebene Führungsrichtung und -anordnung sichert so die völlig spielfreie Verrastung.
Wenn als Rastkörper eine Kugel, ein Kegel(stumpf) oder ein sonstiger Wälzkörper benutzt wird, kann die Ausnehmung eine Nut oder ein Loch sein, im einfachsten Fall ein Kreisloch oder ein Langloch. Es kommen jedoch auch andere Geometrien in Betracht, z.B. polygonale oder unregelmäßig gestaltete Ausnehmungen, sofern deren effektive lichte Weite nur kleiner ist als der am Anlagerand wirksame Durchmesser des Rastkörpers, welcher daher nie bis auf den Ausnehmungsgrund kommen kann.
Der Ausnehmungsrand definiert eine Ebene, die senkrecht zu einer Symmetrielinie der Ausnehmung verläuft. Bevorzugt wird eine Kugel verwendet, die in einer Führung des Rastkörperteils von einem Druckorgan belastet und in Rastposition relativ zu dem Ausnehmungs- bzw. Anlagerand außermittig versetzt ist. Die Führung steht also in einem vorgegebenen Winkel zu der Symmetrielinie, so daß der Rastkörper in seiner Führung von einem Druckorgan in einer Richtung beaufschlagt ist, die von der Symmetrielinie der zugeordneten Ausnehmung abweicht. Unter seiner - durch die Führung des Druckorgans "seitab" gerichteten - Vorspannung kommt der Rastkörper daher im Ausnehmungsteil zu bloß einseitiger Anlage an der Begrenzung, z.B. an einem Lochrand oder einer Nutflanke, so daß die beiden Bauteile spielfrei verrasten. Damit ist ein wesentlicher Fortschritt gegenüber herkömmlichen Rastmitteln erzielt.
Wenn die bzw. jede Ausnehmung in schrägem Abstand zu dem oder jedem Anlagerand eine Anlagekante bzw. Nutflanke aufweist, kann sich daran der Rastkörper, also z.B. eine Kugel, ohne Berührung des vorgelagerten Randes abstützen, was vor allem bei häufig betätigten Rastmitteln den Vorteil verringerten Verschleißes bietet.

Eine besonders günstige Ausführungsform der Erfindung sieht vor, daß an den zu verrastenden Bauteilen mindestens zwei einander zugeordnete Rastpaare vorhanden sind, die aus je einem Rastkörper und einer Ausnehmung bestehen. Dadurch ist eine spielfreie Verrastung automatisch gewährleistet. Eine Doppelpassung wird vermieden, wenn genau zwei Rastpaare eingesetzt werden.

Eines der Bauteile kann an oder auf einem Drehkörper eine Scheibe aufweisen, die um eine Achse drehbar an oder in einem zugeordneten Bauteil gelagert ist und insbesondere an oder nahe ihrem Umfang wenigstens eine mit einem Anlagerand versehene Ausnehmung hat, welch letzterer ein in dem zugeordneten Bauteil gehalterter Wälzkörper unmittelbar gegenübersteht, vorzugsweise eine Kugel, der bzw. die in Richtung zu der Ausnehmung hin vorgespannt und durch die Führung in dem zugeordneten Bauteil relativ zu dem Anlagerand außermittig versetzt ist.
Bei einer vorteilhaften Ausgestaltung hat die Ausnehmung eine zu ihrer Begrenzung parallel oder senkrecht verlaufende Symmetrieachse, so daß eine Verrastung in axialer oder radialer Richtung möglich ist, also sowohl eine "Bodenrastung" als auch eine "Seitenrastung". Das erweitert die Einsatzmöglichkeiten beträchtlich.
Das Ausnehmungsteil bzw. die Scheibe kann wenigstens zwei einander diametral gegenüberliegende Ausnehmungen aufweisen, bevorzugt derart, daß jeder Ausnehmung oder jeder zweiten Ausnehmung ein Wälzkörper bzw. eine Kugel gegenübersteht. Die Rastkörper fassen das Ausnehmungsteil mithin diametral zwischen sich.

Die Erfindung bezieht sich ferner auf die Verwendung eines Rastmittels der vorbeschriebenen Art bei Betätigungshandhaben für Raumabschlußelemente, namentlich Türen oder Fenster, bei oder in einer Lagerung für einen Handgriff und speziell bei einer an einem Griffhals oder -ansatz drehfest angebrachten, in einem Anschlagkörper gefaßten Scheibe, die an oder nahe ihrem Umfang mit Rastausnehmungen versehen und mittels schräg geführten Rastkörpern spielfrei verrastbar ist. Dies ergibt eine zuverlässige Verdrehsicherung für die Bauteile.
Eine bevorzugte Verwendung erfolgt bei einer Scheibe, die auf einer Fläche und/oder an ihrem Umfangsbereich wenigstens eine mit einem Anlagerand versehene Ausnehmung hat, welcher ein in dem Anschlagkörper gehalterter Wälzkörper gegenübersteht, insbesondere eine Kugel, der bzw, die in Richtung auf die Ausnehmung zu vorgespannt und durch eine Führung in Bezug auf den Anlagerand außermittig versetzt ist. Die so ermöglichte Verrastung wird bei der Griffbenutzung als stabil und zuverlässig empfunden.

Wenn die Scheibe kreisförmige oder kreisähnliche Grundgestalt hat und eine Anzahl in Bezug auf ihre Achse rotationssymmetrisch angeordneter Ausnehmungen aufweist, bestimmt die dadurch - in an sich bekannter Weise - festgelegte, deutlich erkennbare Winkelstellung des Handgriffs, ob das Raumabschlußelement geöffnet, teilgeöffnet oder geschlossen ist.

Vorteilhaft ist in dem Anschlagkörper zur Aufnahme der Scheibe eine Aussparung vorgesehen, an der Führungen münden, die Druckfedern zur Belastung der Rastkörper haltern und letztere in der Rastposition punktuell abstützen. Ferner kann der Griffansatz oder -hals wie herkömmlich stirnseitig ein Sackloch aufweisen, in das zur Betätigung einer Schließmechanik ein Mitnehmer formschlüssig einsetzbar ist, insbesondere ein Vierkantstift, mit dem ein Riegel, eine Schloßfalle o.dgl. betätigbar ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Darin zeigen:
- Fig. 1: ein Kräfteschema eines erfindungsgemäßen Rastmittels,
- Fig. 2: eine Seiten-Teitschnittansicht einer Rastmittel-Bauform, wobei die Schnittebene der Linie II in Fig. 4 entspricht,
- Fig. 2a: einen vergrößerten Ausschnitt entsprechend der Kreislinie IIa in Fig. 2,
- Fig. 3: eine Druntersicht eines Anschlagkörpers mit montierter Betätigungshandhabe,
- Fig. 3a: eine vergrößerte Druntersicht entsprechend der Ovallinie lila in Fig. 3,
- Fig. 4: eine Druntersicht eines Anschlagkörpers abgewandelter Bauform mit montierter Betätigungshandhabe,
- Fig. 4a: eine vergrößerte Druntersicht entsprechend der Ovallinie IVa in Fig. 4,
- Fig. 5: eine schematisierte Draufsicht auf eine Linearanordnung in Rastposition,
- Fig. 5a: einen vergrößerten Ausschnitt entsprechend der Kreislinie Va in Fig. 5,
- Fig. 5b: eine Seiten-Schnittansicht der verrasteten Linearanordnung von Fig. 5 und
- Fig. 5c: eine Seiten-Schnittansicht gemäß Fig. 5b, jedoch in entrasteter Position.

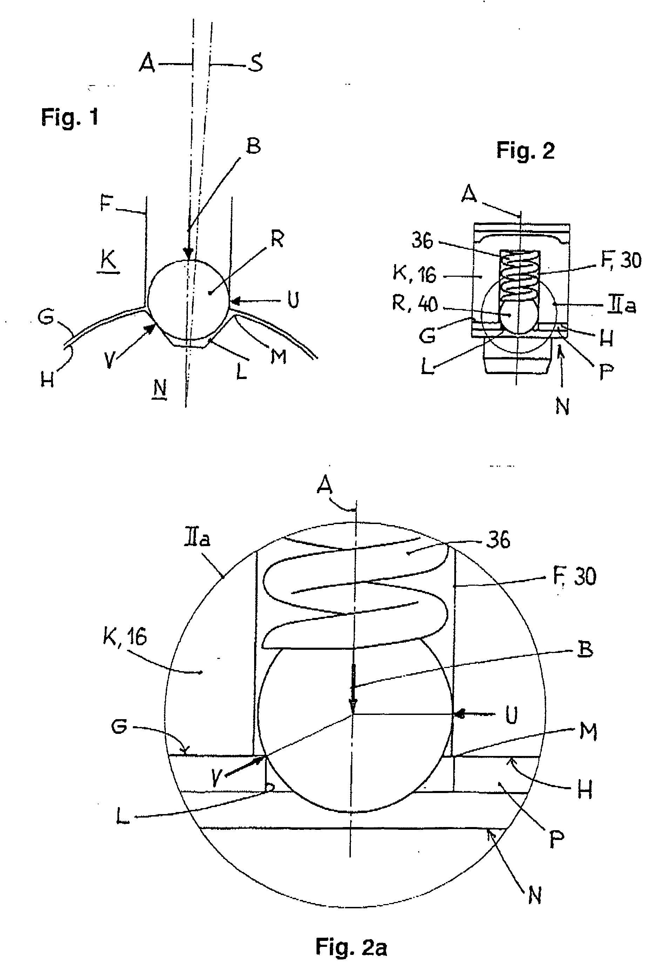

Eine prinzipielle Rast-Anordnung ist in Fig. 1 veranschaulicht. Dabei stehen sich ein Rastkörperbauteil K und ein Ausnehmungsbauteil N mit ihren einander zugewandten Außenflächen G bzw. H gleitbar gegenüber. Im Rastkörperbauteil K befindet sich am unteren Ende einer Führung F ein Rastkörper R. hier eine Kugel, welche die Außenfläche G des Rastkörperbauteils überragt und von einer in der Führung F entlang ihrer Achse A wirkenden Belastungskraft B teilweise an bzw. in eine Ausnehmung L des anderen Bauteils N gedrückt wird. Die Ausnehmung L ist im gezeichneten Beispiel als mit Flanken versehene Nut ausgebildet, deren obere Begrenzung M eine Ebene definiert, zu der eine Symmetrielinie S senkrecht verläuft. Diese steht in einem spitzen Winkel zur Achse A der Führung F, so daß die darin punktuell abgestützte Kugel R unter der Kraft B einerseits an eine Nutflanke, andererseits an den dieser gegenüberliegenden Mündungsrand der Führung F gedrückt wird. Die Kraftvektoren-Ansätze V und U zeigen die hierdurch erzielte spielfreie Verrastung der Körper K und N.

Eine praktische Ausführungsform einer solchen Anordnung geht aus Fig. 2 und der zugehörigen Vergrößerung Fig. 2a hervor. Hierbei bildet das Rastkörperbauteil K ein Gehäuse 16, in dem die Führung F bzw. 30 als Sackloch ausgebildet ist, das eine Druckfeder 36 führt und abstützt. Deren Kraft B belastet eine Kugel R bzw. 40, welche in der gezeigten Rastposition an den Ansatzpunkten der Kraftvektoren U und V zur Anlage kommt, nämlich einerseits (rechts) am Mündungsbereich der Führung F/30 und andererseits (links) an einer Kante des Lochs L einer Platte P, die mit dem Ausnehmungsbauteil N starr verbunden oder einstückig ist. Durch Verschieben der Platte P - nach links oder rechts - wird die Kugel R/40 entgegen der Kraft B nach oben gedrückt, d.h. die Bauteile K. N werden entrastet.

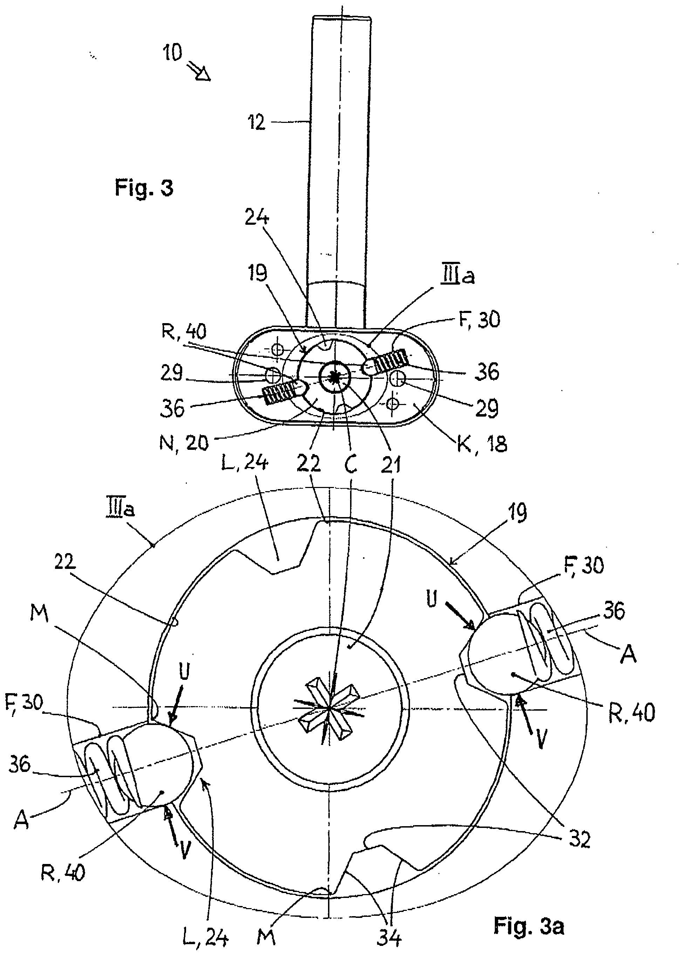

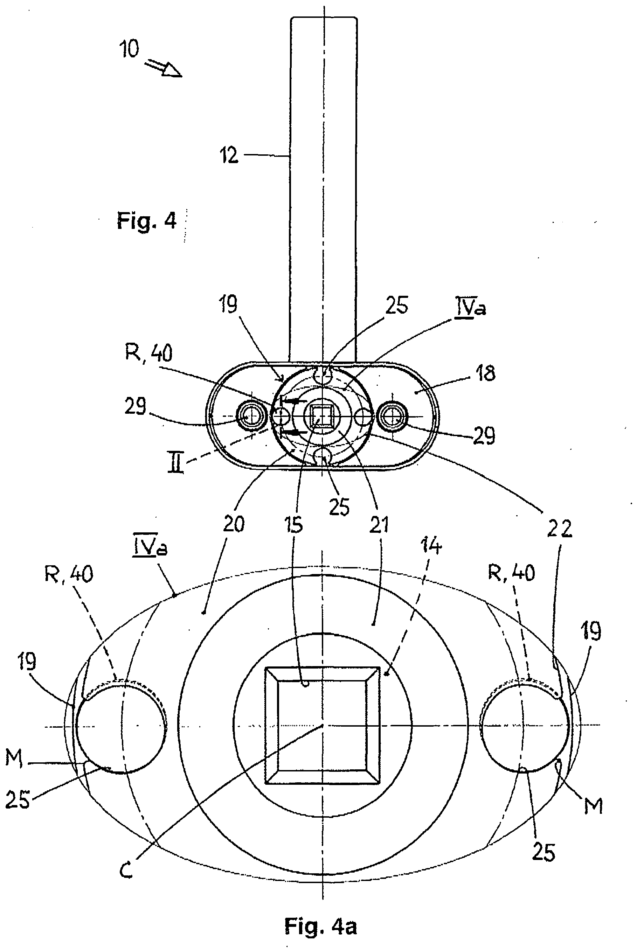

In Fig. 3 ist eine Betätigungshandhabe 10 dargestellt, deren Handgriff 12 am (nicht sichtbaren) Griffhals eine Scheibe N/20 trägt, die durch Verbördelung oder mittels einer Axialschraube 21 fest mit dem Griffhals verbunden und in einem Anschlagkörper K bzw. 18 gelagert ist, der mittels - Nockenbohrungen 29 durchsetzenden - Schrauben (nicht gezeichnet) an einer Fläche befestigbar ist. z.B. an einem Fensterrahmen. Die Scheibe N/20 hat am Umfang 22 vier Nuten L/24, die sich als zwei Nutenpaare kreuzweise gegenüberstehen. Jede Nut 24 weist symmetrisch beiderseits eines Nutgrundes 32 schräge Nutflanken 34 auf, deren oberer Rand eine Begrenzung M bildet. Schräg versetzt zur Hauptausdehnung des Anschlagkörpers K/18 sind in ihm entlang einer Achse A, welche die Drehachse C der Scheibe N/20 schneidet, einander diametral gegenüberliegend zwei Führungen F/30 vorhanden, die je eine Druckfeder 36 abstützen. Davon belastete Kugeln R/40 kommen jeweils an einer Ansatzstelle U einer Nutflanke 34 der Scheibe N/20 und an einer Stützstelle V am Mündungsende der zugeordneten Führung F/30 zur-Rastanlage. -
Ähnlich ist im Ausführungsbeispiel von Fig. 4 und 4a eine Handhabe 10 mit einem Griff 12 vorhanden, von dessen Hals 14 unter einer Verbördelung bzw. einer Axialschraube 21 ein Stirnflächenteil mit einem Vierkantloch 15 erkennbar ist. Durch den Ring 21 ist mit dem Griffhals 14 eine Scheibe 20 drehfest verbunden, die in einem Anschlagkörper 18 gelagert ist und am Umfang 22 vier nach außen teilweise offene Rundnuten 25 aufweist. Sie dienen zur Verrastung mittels Kugeln 40, deren Durchmesser jenen der Rundnuten 25 zumindest geringfügig überschreitet und die senkrecht zur Zeichenebene mittels (hier nicht erkennbarer) leicht schräg geführter Belastungsfedern in den doppeltgestrichelt dargestellten Positionen verrastbar sind.
Zwischen den Ausführungsbeispielen gemäß Fig. 3 bis 4a und dem Stand der Technik bestehen wichtige Unterschiede, die nachfolgend anhand der hier benutzten Kennzeichnungen erläutert werden. Herkömmlich kann in einem Rastkörper-Bauteil (K), das radial zur Drehachse (C) geführte Rastkörper (R) aufweist, eine Scheibe (20) drehbar und axialfest gelagert sein, die an ihrem Umfang (22) gleichförmig verteilte Ausnehmungen (L) hat. Deren Anzahl ist allgemein ein Mehrfaches der Anzahl der Rastkörper (R), die mit gleicher Teilung am Scheibenumfang angreifen. In der Rastposition fallen daher - meist paarig vorhandene - Rastkörper (R) jeweils in zugeordnete Ausnehmungen (L) ein, so daß scheinbar geometrische Deckungsgleichheit gegeben ist. Damit sich der bzw. jeder Rastkörper (R) ungehindert radial bewegen kann, ist es aber unerläßlich, daß jede Führung (F) fertigungs- und funktionsbedingtes Spiel besitzt. Am Ende eines Handgriffs (12) ist dieses durch seinen Hebelarm stark übersetzte Fügespiel deutlich als unerwünscht lockerer Sitz zu empfinden.
Dem begegnet die Erfindung dadurch, daß mindestens zwei Rastpaare vorgesehen werden, jedoch nicht in deckungsgleichen Positionen, sondern (achs)versetzt, wie das besonders deutlich aus Fig. 1 und 3a hervorgeht. Dabei können sich die zwei Rastkörper R bzw. Kugeln 40 in der Raststellung auf einer - die Drehachse C schneidenden - Achse A befinden, zu der die von zwei Nuten 24 gebildeten Ausnehmungen L außermittig versetzt sind. Erfindungsgemäß sind die Lücken bzw. Ausnehmungen L über den Umfang in ungleichen Winkeln verteilt, z.B. an den Enden eines "oberen" Bogens von 182° und eines "unteren" Bogens von 178°. Man erkennt, daß die erfindungsgemäße Symmetrie-Abweichung das störende Rastspiel vollständig beseitigt, und zwar unabhängig von irgendwelchen Fertigungs- oder Montagetoleranzen.

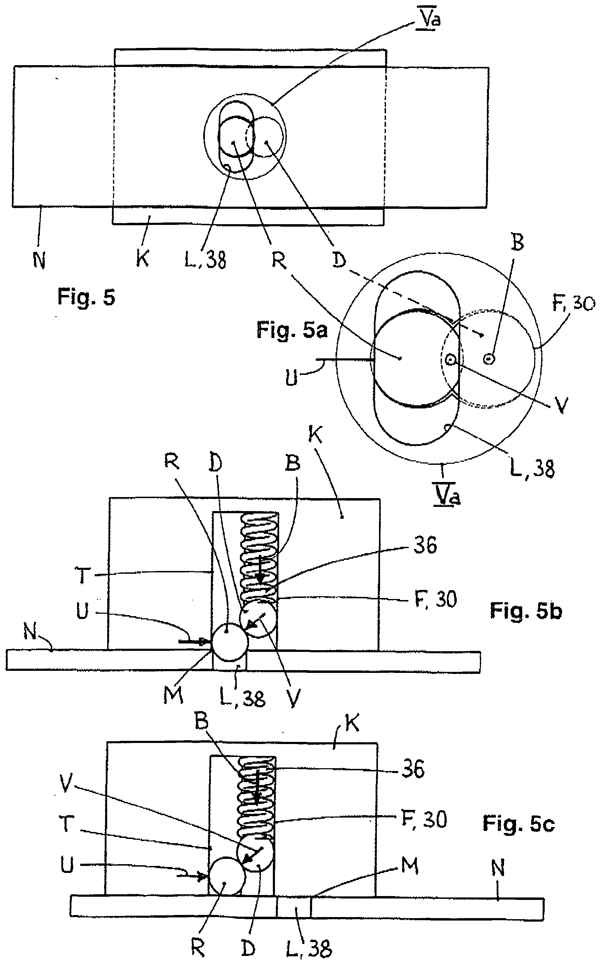

Die erfindungsgemäßen Rastmittel sind auch bei nicht drehsymmetrischen Anordnungen anwendbar. So können bei einer Linearanordnung die beiden Bauteile ein quaderförmiges Gehäuse als Rastkörper K und eine relativ zu diesem verschiebliche Ausnehmungsplatte N. Im Rastkörper K zwei sich überschneidende Sacklöcher gleichen Durchmessers vorhanden sein (Fig. 5 bis 5c). Das eine Sackloch nimmt als Führung F/30 eine Druckfeder 36 auf, die mit der Kraft B eine Druckkugel D unmittelbar beaufschlagt. In einem achsparallel daneben befindlichen anderen Sackloch ist eine Kugel R geführt, die von der Druckkugel D mit der Kraft V belastet wird. Die Kugel R steht der Begrenzung M eines Langlochs L bzw. 38 gegenüber, das bevorzugt quer zur Schieberichtung der Bauteile K, N angeordnet ist. Wenn die Platte N die Position von Fig. 5b einnimmt, rastet die Kugel R rastet seitlich am Ansatzpunkt U der Wandung T ein. Fig. 5c zeigt die entrastete Position, bei der die verschobene Platte N mit der Langlochkante die Rastkugel R und die an ihr im Ansatzpunkt V anliegende Druckkugel D entgegen der Kraft B angehoben hat, so daß die Körper K, N aneinander vorbeigleiten können.
Ein großer Vorteil all dieser Rastanordnungen ist, daß auch bei Kantenverschleiß nach längerem Gebrauch eine federkraftbedingte Selbstnachstellung der Rastmechanik stattfindet. Selbst wenn - abweichend vom Normalfall der einseitigen Rastkugel-Anlage - eine Kugel in stabilem Gleichgewicht an beiden Kanten des Langlochrandes aufliegt, kann die Rastkraft bei entsprechender Dimensionierung der Druckfeder 36 eine Verschiebung der Bauteile K, N unterbinden. Beispielsweise können statt durchgehender Löcher als Ausnehmungen L bzw. 24/25/38 auch Mulden, Rinnen o.dgl. und/oder andere Konfigurationen der Begrenzungen M vorgesehen sein, sofern nur der wirksame Ausnehmungs-Rastdurchmesser den wirksamen Rastdurchmesser der Kugeln R bzw. 40 unterschreitet und letztere auch in der tiefsten Lage zumindest geringfügigen Abstand zu einem Ausnehmungsboden einhalten. Auch kann eine Druckkugel D zwei oder mehr Rastkugeln R beaufschlagen, wenn deren Führungsschächte die Zentralführung F konzentrisch bzw. symmetrisch umgeben. Ferner sind Reihenanordnungen von Führungen F mit federbelasteten Druck- und/oder Rastkugeln möglich.
Zusammenfassend ist festzuhalten, daß Rastmittel für relativ zueinander bewegliche Bauteile, namentlich für Bauteilpaare K/N, deren Einzelteile einander räumlich unmittelbar zugeordnete Flächen G/H aufweisen, an denen vorstehende Elemente R mit einspringenden Elementen L kraftschlüssig zusammenwirken, erfindungsgemäß in einem Rastkörperbauteil K wenigstens einen unter Vorspannung stehenden Rastkörper R aufweisen, der in einer Führung F insbesondere unverlierbar so gehalten ist, daß er eine Rastkörperteil-Außenfläche G überragt und an einem Ausnehmungsbauteil N unter schräger Belastung teilweise in eine zugeordnete Ausnehmung L einer zugewandten Außenfläche H eintritt. Die Führung F des in ihr punktuell abgestützten Rastkörpers R ist so gerichtet, daß er nur einseitig punktuell an einem Ausnehmungsrand M des zugeordneten Bauteils N andrückt.
Bei einer bevorzugten Ausführungs- bzw. Verwendungsform hat eine Betätigungshandhabe 10 für Türen, Fenster u. dgl. einen Handgriff 12, der mit einem Hals bzw. Ansatz 14 in bzw. an einem Anschlagkörper 18 axialfest-drehbar gelagert ist. In eine axiale Ausnehmung 15 des Griff-Ansatzes 14 ist zur Betätigung einer Schließmechanik ein Mitnehmer einfügbar, z.B. ein Vierkant. Der Anschlagkörper 18 lagert eine mit dem Ansatz 14 drehfest verbundene Scheibe 20, die an oder nahe ihrem Umfang 22 mit Ausnehmungen versehen ist, z.B. mit Nuten 24, 25. Nahe dem Scheibenumfang münden Führungen 30, die sich - vorzugsweise entlang ihrer Achse A - beiderseits der Scheibe 20 diametral gegenüberstehen können, Druckfedern 36 enthalten und von diesen befastete Kugeln 40 in spitzem Winkel zur Symmetrielinie S der Nuten 24/25 führen. In der Endstellung kommen die führungsgestützten Rastkugeln 40 punktuell an den Rastausnehmungen 24, 25 des Ausnehmungsbauteils N zur Anlage, wodurch eine spielfreie Verdrehsicherung erreicht wird.

**Bezugszeichenliste**

| | | | |
|---|---|---|---|
| A | Achse | L | Ausnehmung/Loch |
| B | Belastungskraft | M | Begrenzung/Rand |
| C | Drehachse | N | Ausnehmungs-Bauteil |
| D | Druckkörper/-kugel | P | (Unter-)Platte |
| F | Führung | R | Rastkörper/Kugel |
| G | Rastkörperteil-Außenfläche (von K) | S | Symmetrieachse |
| H | Ausnehmungsteil-Außenfläche (von N) | T | (Stütz-)Wandung |
| K | Rastkörper-Bauteil | U, V, W | Kraftvektor-Ansätze |
| 10 | Betätigungshandhabe | 24 | Nut(en) |
| 12 | Handgriff | 25 | Rundnut(en) |
| 14 | Griffansatz/-hals | 29 | Nocken(bohrungen) |
| 15 | Vierkantloch | 30 | Führung/Schacht |
| 16 | Gehäuse | 32 | Nutgrund |
| 18 | Anschlagkörper | 34 | Nutflanke(n) |
| 19 | Aussparung | 36 | (Druck-)Feder |
| 20 | Scheibe | 38 | Langloch |
| 21 | Bördelung/Axialschraube | 40 | (Rast-)Kugel |
| 22 | Umfang | | |

## Patentansprüche

1. Rastmittel einer Betätigungshandhabe für Fenster oder Türen oder für relativ zueinander bewegliche Bauteile (K, N) aufweisend
- einen Rastkörperteil (K, 18) und einen Ausnehmungsteil (N), die einander räumlich unmittelbar zugeordnete und einander zugewandte Flächen, nämlich eine Rastkörperteil-Außenfläche (G) und eine Ausnehmungsteil-Außenfläche (H), aufweisen;
weiterhin aufweisend
- wenigstens einen Rastkörper (R, 40), der in einer Führung (F, 30) des Rastkörperteils (K, 18) unter Vorspannung stehend insbesondere unverlierbar so gehalten ist, dass er die Rastkörperteil-Außenfläche (G) überragt, und
in eine Ausnehmung (L), die an einer dem Rastkörperteil (K, 18) zugewandten Ausnehmungsteil-Außenfläche (H) des Ausnehmungsteils (N) vorgesehen ist, teilweise eintritt,
**gekennzeichnet durch** solche Ausbildung und Anordnung der Führung (F, 30) des bzw. jedes Rastkörpers (R, 40), dass
- sich der Rastkörper (R, 40) nur einseitig oder punktuell an einer Stützstelle (V) der Führung (F, 30) und an einer zugeordneten Ansatzstelle (U) der Ausnehmung (L) andrückt und **dadurch, dass**
- an den zu verrastenden Bauteilen (K, 18; N, 24/38) mindestens zwei einander zugeordnete Rastpaare vorhanden sind, die jeweils aus je einem Rastkörper (R, 40) und einer Ausnehmung (L, 24) bestehen, und dass
- die Rastkörper (R) mit gleicher Teilung an einem Umfang des Ausnehmungsteils (N) angreifen und die Ansatzstellen (U) der Ausnehmungen (L) in ungleichen Winkeln auf dem Umfang des Ausnehmungsteils (N) verteilt sind.

2. Rastmittel nach Anspruch 1, **dadurch gekennzeichnet, dass** der bzw. jeder Rastkörper (R, 40) in einem durch die vorgegebene Richtung der Führung (F, 30) definierten Winkel und/oder außermittig an oder neben der zugeordneten Ausnehmungsbegrenzung (M) zur Anlage kommt.

3. Rastmittel nach Anspruch 1 oder 2, **dadurch gekennzeichnet, dass** die bzw. jede Ausnehmung (L) eine Nut (24) oder ein Kreisloch oder ein Langloch (38) ist.

4. Rastmittel nach einem der Ansprüche 1 bis 3, **dadurch gekennzeichnet, dass** die Ausnehmungsbegrenzung (M) eine Ebene definiert, die senkrecht zu ihrer Symmetrielinie (S) verläuft.

5. Rastmittel nach einem der Ansprüche 1 bis 4, **dadurch gekennzeichnet, dass** der bzw. jeder Rastkörper (R) eine Kugel (40) ist, die in ihrer Führung (F, 30) von einer Druckfeder (36) belastet und in Rastposition relativ zu der Ausnehmungsbegrenzung (M) außermittig versetzt ist.

6. Rastmittel nach einem der Ansprüche 1 bis 5, **dadurch gekennzeichnet, dass** die Führung (F, 30) in einem vorbestimmten Winkel zu einer Symmetrielinie (S) der Ausnehmung (L) ausgerichtet ist.

7. Rastmittel nach einem der Ansprüche 1 bis 6, **dadurch gekennzeichnet, dass** die bzw. jede Ausnehmung (L) in schrägem Abstand zu der bzw. jeder Anlagebegrenzung (M) eine Anlagekante aufweist, z.B. eine Nutflanke (34), an der sich der Rastkörper (R, 40) ohne Berührung des Randes (M) selbst abstützt.

8. Rastmittel nach einem der Ansprüche 1 bis 7 in Verbindung mit einem Bauteilpaar, wobei eines der Bauteile (N) an oder in einem Drehkörper (12, 14) eine Scheibe (20) aufweist, die um eine Achse (C) drehbar an oder in einem zugeordneten Bauteil (K, 18) gelagert ist, **dadurch gekennzeichnet, dass** die Scheibe (20) an oder nahe ihrem Umfang (22) wenigstens eine mit einem Anlagerand (M) versehene Ausnehmung (L, 24) hat, welcher ein in dem zugeordneten Bauteil (K, 18) gehalterter Wälzkörper (R, 40) unmittelbar gegenübersteht, der in Richtung zu der Ausnehmung (L, 24) hin vorgespannt und durch eine Führung (F, 30) in dem zugeordneten Bauteil (K, 18) relativ zu dem Anlagerand (M) außermittig versetzt ist.

9. Rastmittel nach einem der Ansprüche 1 bis 8, **dadurch gekennzeichnet, dass** die Ausnehmung (L, 24) eine zu ihrer Begrenzung (M) parallel oder senkrecht verlaufende Symmetrieachse (S) hat, so dass die Bauteile (K, 18; N, 20) in axialer oder radialer Richtung verrastbar sind.

10. Rastmittel nach einem der Ansprüche 1 bis 9, **dadurch gekennzeichnet, dass** das Ausnehmungsteil (N) bzw. die Scheibe (20) wenigstens zwei einander diametral gegenüberliegende Ausnehmungen (L, 24) aufweist.

11. Rastmittel nach Anspruch 10, **dadurch gekennzeichnet, dass** jeder Ausnehmung oder jeder zweiten Ausnehmung (L, 24) ein Wälzkörper (R) gegen-übersteht, vorzugsweise eine Kugel (40).

12. Verwendung eines Rastmittels nach einem der Ansprüche 1 bis 11 an Betätigungshandhaben (10) für Raumabschlusselemente, namentlich für Türen oder Fenster, bei oder in einer Lagerung für einen Handgriff (12).

13. Verwendung eines Rastmittels nach Anspruch 12 bei einer in einem Anschlag-körper (18) gefassten Scheibe (20), die an einem Griffhals oder -ansatz (14) drehfest angebracht, an oder nahe ihrem Umfang (22) mit Rastausnehmungen (24, 25) versehen und mittels in Schrägführungen (F, 30) abgestützten Rast-körpern (R, 40) spielfrei verrastbar ist.

14. Verwendung eines Rastmittels nach Anspruch 12 oder 13 bei einer Scheibe (20), die auf einer Fläche und/oder an ihrem Umfangsbereich (22) wenigstens eine mit einem Anlagerand (M) versehene Ausnehmung (L, 24) hat, welcher eine in dem Anschlagkörper (K, 18) gehalterte, federbelastete Kugel (R, 40) unmittelbar gegenübersteht, die in Richtung auf die Ausnehmung (L, 24) zu vorgespannt und durch eine Führung (F, 30) in Bezug auf den Anlagerand (M) außermittig versetzt ist.

15. Verwendung nach Anspruch 13 oder 14, **dadurch gekennzeichnet, dass** die Scheibe (20) kreisförmige oder kreisähnliche Grundgestalt hat und eine Anzahl in Bezug auf ihre Achse (C) rotationssymmetrisch angeordneter Ausnehmungen (L, 24) aufweist, und dass den Ausnehmungen (L, 24) oder jeder zweiten Ausnehmung jeweils eine Kugel (40) gegenübersteht.

16. Verwendung nach einem der Ansprüche 12 bis 15, **dadurch gekennzeichnet, dass** zur Aufnahme der Scheibe (20) in dem Anschlagkörper (18) eine ihr formgleiche oder formähnliche Aussparung (19) vorgesehen ist, an der die bzw. jede Führung (F, 30) mündet.

17. Verwendung nach einem der Ansprüche 12 bis 16, **dadurch gekennzeichnet, dass** der Ansatz (14) des Handgriffs (12) stirnseitig ein Sackloch (15) aufweist, in das zur Betätigung einer Riegel- oder Schließmechanik ein Mit-nehmer formschlüssig einsetzbar ist, insbesondere ein Vierkantstift.

## Claims

1. Securing means for an actuating handle for windows or doors or for components (K, N) that are moveable relative to one another, comprising
- a detent sub-assembly (K, 18) and a recess sub-assembly (N) comprising spatially directly associated surfaces that are facing each other, namely a detent sub-assembly outer surface (G) and a recess sub-assembly outer surface (H), further comprising
- at least one prestressed detent element (R, 40) which is kept and in particular is trapped in a guide (F, 30) of the detent sub-assembly (K, 18) so as to project beyond the detent sub-assembly outer surface (G) and partly enter a recess (L) that is provided at a recess sub-assembly outer surface (H) of the recess sub-assembly (N) facing the detent sub-assembly (K, 18),
**characterised by** a design and configuration of the guide (F, 30) of the or each detent element (R, 40) that
- the detent element (R, 40) rests only unilaterally or point-wise against a supporting point (V) of the guide (F, 30) and at an associated attachment point (U) of the recess (L) and that
- at the detent assemblies (K, 18; N, 24/38) to be latched at least two associated securing pairs are provided which are each formed of a detent element (R, 40) and a recess (L, 24), and that
- the detent elements (R) engage in equal parts at a circumference of the recess sub-assembly (N) and the attachment points (U) of the recesses (L) are distributed on the circumference of the recess sub-assembly (N) at unequal angles.

2. Securing means according to claim 1, **characterised in that** the or each detent element (R, 40) comes to rest at an angle defined by the predetermined direction of the guide (F, 30) and/or eccentrically at or next to the associated recess boundary (M).

3. Securing means according to claim 1 or 2, **characterised in that** the or each recess (L) is a notch (24) or a circular hole or an elongated slot (38).

4. Securing means according to any of claims 1 to 3, **characterised in that** the recess boundary (M) defines a plane extending perpendicularly to its line of symmetry (S).

5. Securing means according to any of claims 1 to 4, **characterised in that** the or each detent element (R) is a ball (40) which is loaded in its guide (F, 30) by a compression spring (36) and which in its detent interlocked position is eccentrically offset relative to the recess boundary (M).

6. Securing means according to any of claims 1 to 5, **characterised in that** the guide (F, 30) is oriented at a predetermined angle to a line of symmetry (S) of the recess (L).

7. Securing means according to any of claims 1 to 6, **characterised in that** the or each recess (L) is fitted with a rest edge which is obliquely away from the or each rest boundary (M), e.g. a notch flank (34) that supports the detent element (R, 40) without making contact with the rim (M) per se.

8. Securing means according to any of claims 1 to 7 in conjunction with one pair of sub-assemblies, wherein one of the sub-assemblies (N) comprises a disk (20) at or in a rotatable body (12, 14), the disk being rotatable about an axis (C) and supported at or in an associated sub-assembly (K, 18), **characterised in that** the disk (20) is fitted at or near its circumference (22) with at least one recess (L, 24) having a rest rim (M), said recess being directly opposite a revolving element (R, 40) retained in the associated sub-assembly (K, 18), said revolving element being prestressed in the direction of the recess (L, 24) and being eccentrically offset by means of a guide (F, 30) in the associated sub-assembly (K, 18) relative to the rest rim (M).

9. Securing means according to any of claims 1 to 8, **characterised in that** the recess (L, 24) comprises an axis of symmetry (S) parallel or perpendicular to its boundary (M), so that the sub-assemblies (K, 18; N, 20) can be interlocked in the axial or radial direction.

10. Securing means according to any of claims 1 to 9, **characterised in that** the recess sub-assembly (N) or the disk (20) comprises at least two diametrically opposite recesses (L, 24).

11. Securing means according to claim 10, **characterised in that** each recess or each second recess (L, 24) is opposite a revolving element (R), preferably a ball (40).

12. Use of securing means according to any of claims 1 to 11 at actuation handles (10) for room closure elements, namely for doors or windows, at or in a support for a handle (12).

13. Use of securing means according to claim 12 for a disk (20) which is retained in a stop body (18) and non-rotatably mounted at a handle neck or extension (14), that is fitted at or near its circumference (22) with detent recesses (24, 25) and able to be interlocked in play-free manner by means of detent elements (R, 40) supported in oblique guides (F, 30).

14. Use of securing means according to claim 12 or 13 for a disk (20) which is fitted on a surface and/or at its circumferential zone (22) with at least one recess (L, 24) fitted with a rest edge (M), said recess being directly opposite a spring-loaded ball (R, 40) retained in the stop body (K, 18), said ball being prestressed towards the recess (L, 24) and being eccentrically offset by means of a guide (F, 30) relative to the rest rim (M).

15. Use according to claim 13 or 14, **characterised in that** the disk (20) is circular or approximately circular and comprises a number of recesses (L, 24) arranged in rotational symmetry relative to its axis (C), and **in that** one ball (40) is opposite the recesses (L, 24) or each second recess.

16. Use according to any of claims 12 to 15, **characterised in that** a recess (19) of the same or similar shape as the disk is provided in the stop body (18) to receive the disk (20), the or each guide (F, 30) issuing into said recess.

17. Use according to any of claims 12 to 16, **characterised in that** the extension (14) of the handle (12) is fitted at its end face with a blind hole (15) into which a matched and in particular a square drive pin can be form-fittingly inserted for actuating a latching or locking mechanism.

## Revendications

1. Moyen d'indexation d'une poignée d'actionnement pour fenêtres ou portes ou pour des composants mobiles les uns par rapport aux autres (K, N) présentant
- une partie de corps d'indexation (K, 18) et une partie d'évidement (N), qui présentent des surfaces associées directement dans l'espace les unes aux autres et tournées les unes vers les autres, à savoir une surface extérieure de partie de corps d'indexation (G) et une surface extérieure de partie d'évidement (H) ;
présentant en outre
- au moins un corps d'indexation (R, 40), qui est retenu sous précontrainte en particulier de manière imperdable dans un guide (F, 30) de la partie de corps d'indexation (K, 18), de sorte qu'il dépasse de la surface extérieure de partie de corps d'indexation (G), et entre en partie dans un évidement (L), qui est prévu au niveau d'une surface extérieure de partie d'évidement (H) tournée vers la partie de corps d'indexation (K, 18) de la partie d'évidement (N),
**caractérisé par** une telle réalisation et un tel agencement du guide (F, 30) du ou de chaque corps d'indexation (R, 40), que
- le corps d'indexation (R, 40) ne s'appuie qu'unilatéralement ou ponctuellement contre un point d'appui (V) du guide (F, 30) et contre un point d'application associé (U) de l'évidement (L) et en ce que
- au moins deux paires d'indexation associées les unes aux autres, qui se composent chacune de respectivement un corps d'indexation (R, 40) et d'un évidement (L, 24), sont présentes au niveau des composants à indexer (K, 18 ; N, 24/38), et que
- les corps d'indexation (R) viennent en prise avec le même pas sur une circonférence de la partie d'évidement (N) et les points d'application (U) des évidements (L) sont répartis selon des angles inégaux sur la circonférence de la partie d'évidement (N).

2. Moyen d'indexation selon la revendication 1, **caractérisé en ce que** le ou chaque corps d'indexation (R, 40) vient s'appliquer selon un angle défini par la direction prédéfinie du guide (F, 30) et/ou de manière excentrique contre ou à côté de la limitation d'évidement associée (M).

3. Moyen d'indexation selon la revendication 1 ou 2, **caractérisé en ce que** le ou chaque évidement (L) est une rainure (24) ou un trou rond ou un trou oblong (38).

4. Moyen d'indexation selon l'une quelconque des revendications 1 à 3, **caractérisé en ce que** la limitation d'évidement (M) définit un plan, qui s'étend perpendiculairement à sa ligne de symétrie (S).

5. Moyen d'indexation selon l'une quelconque des revendications 1 à 4, **caractérisé en ce que** le ou chaque corps d'indexation (R) est une bille (40), qui est sollicitée dans son guide (F, 30) par un ressort de compression (36) et est décalée de manière excentrique en position d'indexation par rapport à la limitation d'évidement (M).

6. Moyen d'indexation selon l'une quelconque des revendications 1 à 5, **caractérisé en ce que** le guide (F, 30) est orienté selon un angle prédéfini par rapport à une ligne de symétrie (S) de l'évidement (L).

7. Moyen d'indexation selon l'une quelconque des revendications 1 à 6, **caractérisé en ce que** le ou chaque évidement (L) présente à une distance oblique par rapport à la ou à chaque limitation d'application (M), une arête d'application, par exemple un flanc de rainure (34), contre laquelle s'appuie le corps d'indexation (R, 40) sans toucher le bord (M) proprement dit.

8. Moyen d'indexation selon l'une quelconque des revendications 1 à 7 en relation avec une paire de composants, dans lequel un des composants (N) présente au niveau de ou dans un corps rotatif (12, 14) un disque (20), qui est logé de manière rotative autour d'un axe (C) au niveau de ou dans un composant associé (K, 18), **caractérisé en ce que** le disque (20) a au niveau ou à proximité de sa circonférence (22) au moins un évidement (L, 24) doté d'un bord d'application (M), auquel un corps de roulement (R, 40) maintenu dans le composant associé (K, 18) fait directement face, qui est précontraint en direction de l'évidement (L, 24) et est décalé de manière excentrique par rapport au bord d'application (M) dans le composant associé (K, 18) par un guide (F, 30).

9. Moyen d'indexation selon l'une quelconque des revendications 1 à 8, **caractérisé en ce que** l'évidement (L, 24) a un axe de symétrie (S) s'étendant parallèlement ou perpendiculairement à sa limitation (M), de sorte que les composants (K, 18 ; N, 20) peuvent être indexés en direction axiale ou radiale.

10. Moyen d'indexation selon l'une quelconque des revendications 1 à 9, **caractérisé en ce que** la partie d'évidement (N) ou le disque (20) présente au moins deux évidements (L, 24) diamétralement opposés.

11. Moyen d'indexation selon la revendication 10, **caractérisé en ce qu'**un corps de roulement (R), de préférence une bille (40), fait face à chaque évidement ou à chaque deuxième évidement (L, 24).

12. Utilisation d'un moyen d'indexation selon l'une quelconque des revendications 1 à 11 au niveau de poignées d'actionnement (10) pour des éléments de fermeture de pièce, nommément pour des portes ou fenêtres, pour ou dans un logement pour une poignée (12).

13. Utilisation d'un moyen d'indexation selon la revendication 12 pour un disque (20) saisi dans un corps de butée (18), qui est monté solidaire en rotation au niveau d'un col ou rehausse de poignée (14), est doté d'évidements d'indexation (24, 25) au niveau ou à proximité de sa circonférence (22) et peut être indexé sans jeu au moyen de corps d'indexation (R, 40) soutenus dans des guides obliques (F, 30).

14. Utilisation d'un moyen d'indexation selon la revendication 12 ou 13 pour un disque (20), qui a sur une surface et/ou au niveau de sa zone circonférentielle (22) au moins un évidement (L, 24) doté d'un bord d'application (M), auquel une bille (R, 40) sollicitée par ressort maintenue dans le corps de butée (K, 18) fait directement face, qui est précontrainte en direction de l'évidement (L, 24) et est décalée de manière excentrique par rapport au bord d'application (M) par un guide (F, 30).

15. Utilisation selon la revendication 13 ou 14, **caractérisée en ce que** le disque (20) a une forme de base circulaire ou semblable à un cercle et présente un nombre d'évidements (L, 24) agencés de manière symétrique en rotation par rapport à leur axe (C), et que respectivement une bille (40) fait face aux évidements (L, 24) ou à chaque deuxième évidement.

16. Utilisation selon l'une quelconque des revendications 12 à 15, **caractérisée en ce que** pour la réception du disque (20) dans le corps de butée (18), un renfoncement (19) de forme identique ou semblable à celui-ci est prévu, au niveau duquel le ou chaque guide (F, 30) débouche.

17. Utilisation selon l'une quelconque des revendications 12 à 16, **caractérisée en ce que** la rehausse (14) de la poignée (12) présente côté frontal un trou borgne (15), dans lequel un entraîneur, en particulier une tige carrée, peut être inséré par correspondance de forme pour l'actionnement d'un mécanisme de verrouillage ou de fermeture.
